# EUROPEAN PATENT SPECIFICATION

(11) **EP 2 810 033 B1**
(45) Date of publication and mention of the grant of the patent: **20.06.2018**
(21) Application number: 13743386.8
(22) Date of filing: 30.01.2013
(51) Int. Cl.: G01K 7/24, G01K 3/00, H01C 1/148, G01K 3/06, H01C 1/16, H01C 13/02, H01C 7/00, H01C 7/02, H01C 7/04

(54) **LARGE AREA TEMPERATURE SENSOR**
GROSSFLÄCHIGER TEMPERATURSENSOR
CAPTEUR DE TEMPÉRATURE À GRANDE ÉTENDUE

(30) Priority: 30.01.2012 ZA 201200771
(43) Date of publication of application: 10.12.2014
(73) Proprietor: PST Sensors (Pty) Limited, 7405 Cape Town (ZA)
(72) Inventor: BRITTON, David Thomas, 8001 Cape Town (ZA); HARTING, Margit, 7701 Cape Town (ZA)
(74) Representative: Bradley, Adrian
(86) International application number: PCT/IB2013/050784
(87) International publication number: WO 2013/114293

(56) References cited:
- CN-A- 102 322 974
- JP-A- H09 326 303
- JP-A- H10 260 086
- JP-A- H10 318 852
- US-A- 6 137 669
- US-A1- 2002 196 837
- US-A1- 2002 196 837
- US-B2- 7 563 024
- US-B2- 7 563 024
- YANG, Y.J. ET AL.: 'Development of a Flexible Temperature Sensor Array System' KEY ENGINEERING MATERIALS vol. 381, 2008, pages 383 - 386, XP055079525

## Description

### BACKGROUND OF THE INVENTION

THIS invention relates to temperature sensing devices and a method of producing such devices.

In many applications, in fields as diverse as engineering, health care, packaging and transport, it is desirable to obtain quantitative information on the temperature of a large irregularly shaped object, or of a complex structure whose shape or configuration may change under different conditions or be caused to change. Such an object may be made of thin flexible material such as fabric, polymer film or paper, or may be a rigid or ductile part composed of metal, plastic or a composite material, for example. Alternatively, a sensor may be required to determine the average temperature over a specific portion of a larger area, for example in an environmentally controlled room or chamber, or in a refrigeration unit.

A common method used for such measurements is infrared or visible thermography, in which the radiation emitted by the object is recorded by a digital camera. While having the advantage, for some applications, of being a non-contact measurement, this is often a disadvantage due to factors such as extraneous radiation, poor visibility and obscuring of the field of view, transparency of the material and variation in emissivity and reflectivity. It is therefore often desirable to utilize a sensor which is in good direct thermal contact with the object. Generally this requires either a flexible or conformable sensor which can be affixed to a non-flat surface. Presently, when a direct temperature measurement is required, individual discrete components are mounted onto the object. The sensors used are either thermocouples or, more often, resistive devices such as thermistors.

The document US2002/0196837A1 discloses a temperature sensor comprising multiple thermistors of equal resistance spaced apart in a circuit. The sensor is intended for use in monitoring fluid temperature.

The document JPH10260086A discloses a ladder-like electrical network of resistors in order to improve reliability of temperature detection.

It is an object of the invention to provide an alternative temperature sensing device which can be applied to differently sized and shaped objects to be measured.

### SUMMARY OF THE INVENTION

According to the invention there is provided a sensing device according to claim 1.

In practice, the network will preferably be a square or hexagonal network.

The sensing device comprises a regular pattern of electrically conductive contacts with a complemental pattern of semiconductor material with a temperature dependent resistance in contact with said contacts, thereby to define a network of thermistor elements corresponding to said regular pattern.

For example, the device may comprise a network of pairs of electrically conductive contacts connected by conductive connecting tracks deposited on a substrate, with the material having a temperature dependent resistance being deposited selectively over the pairs of contacts to define thermistor elements of the device.

Conversely, the material having a temperature dependent resistance may be deposited on the substrate, with the network of pairs of electrically conductive contacts connected by electrically conductive connecting tracks being deposited thereon.

The substrate may comprise flexible sheet material such as paper sheet, a polymer film, fabric or an insulated metal foil, for example.

Alternatively the substrate may comprise a rigid material, such as any suitable stiff plastics sheet material, paper board, composite materials or coated metal sheet, for example.

The conductive contacts and tracks and the material having a temperature dependent resistance may all be formed by screen printing of a conducting ink or paste, but any known suitable printing, coating or vacuum deposition process could also be used.

In one example embodiment, a sensing device comprises a network of sets of electrically conductive contacts connected by electrically conductive tracks extending between the sets of contacts, the sets of contacts and the conductive tracks being deposited on a substrate, with a layer of material having a temperature dependent resistance being applied to each set of contacts to define a network of interconnected thermistors.

Each set of contacts may comprise two sets of interdigitated fingers extending adjacent one another, with the fingers of one set of fingers being connected to a first node of the network and the fingers of the other set of fingers being connected to a second, adjacent node of the network.

In another example embodiment, the sensing device comprises an array of discrete contacts deposited on a suitable substrate, with a layer of material having a temperature dependent resistance being applied over the contacts to define a network of interconnected thermistors.

### BRIEF DESCRIPTION OF THE DRAWINGS

Figure 1 is a schematic diagram showing a "square" network of identical temperature dependent resistors falling outside the scope of claim 1;
Figure 2 is a schematic plan view of a first example embodiment of a large area printed temperature sensor array comprising a square network of individual printed thermistors; and
Figure 3 is a schematic plan view of a second example embodiment of a large area printed temperature sensor array having a simplified structure.

### DESCRIPTION OF EMBODIMENTS

The present invention relates to temperature sensing devices. Also disclosed is a method of producing such devices. In particular, the devices may be large area negative temperature coefficient thermistors, produced by printing techniques on thin substrates, which may be cut to size without affecting the characteristics of the device. Of particular relevance here are thermistors which have a negative temperature coefficient of resistance, commonly known as NTC thermistors, meaning that their electrical resistance decreases approximately exponentially with increasing temperature.

The present invention therefore concerns the use of thermistors, specifically printed negative temperature coefficient (NTC) thermistors, which can be applied as single large area sensor to determine an average temperature or as a temperature sensing array as described in our co-pending provisional patent application Thermal Imaging Sensor, filed on 30 January 2012, where the sensors may be individually addressed or addressed as a row and column matrix. The present invention is not restricted to printed NTC thermistors, but is equally applicable to any flexible temperature sensor, the resistance of which changes with temperature, and so may equally applied to a positive temperature coefficient (PTC) thermistor or resistance temperature device (RTD), and to any such device fabricated on a flexible substrate material. Other types of resistive sensor falling outside the scope of the invention, including but not limited to a piezoresistor or a photoresistor may also be made, allowing similar large area sensors for other applications such as strain and pressure sensing or the detection of visible and invisible radiation.

Existing thermistors of this general type are composed of pastes comprised of a powder of a compound semiconductor material and a binder material, such as a glass frit. This paste is either screen printed onto a ceramic substrate or cast to form a green body, after which it is sintered at high temperature to form a massive layer or body of semiconductor material. Invariably, because of distortion during the thermal treatment, further trimming of the material to obtain the correct resistance is required before metallization, in the case of thick-film thermistors.

The fabrication processes used place limitations on the substrate materials that can be used, precluding the use of many lightweight, flexible materials such as paper and polymer film. Traditionally, thick-film inks used for the fabrication of thermistors are composed of heavy metal sulphides and or tellurides, such as lead sulphide, and are not compliant with modern legislation such as the European Restriction on Hazardous Substances (ROHS). Recently introduced alternative materials include compositions of mixtures of rare earth and transition metal oxides, such as manganese oxide. Thermistors based on silicon are usually cut from heavily doped silicon wafers, and have a positive temperature coefficient of resistance.

These fabrication methods are not compatible with the use of conventional thermistors in large area arrays. Therefore a printed device of the type described by us in PCT/IB2011/054001 is preferred. Depending on the requirements of the application, the substrate on which the sensor is printed may be rigid or flexible as described in our own prior art. Similarly other components of the sensor array, including but not limited to temperature independent resistors, conductive tracks and insulators may also be printed onto the substrate material. Any commonly known printing process, such as screen printing, gravure printing, flexography and ink jet printing, which are applied in the printed electronics or thick film electronics industries may be used. Alternatively discrete components may be affixed to the substrate material and connected to each other by any suitable method commonly used in the electronics assembly industry.

As an alternative to an NTC thermistor, a positive temperature coefficient (PTC) thermistor or resistance temperature device (RTD) may be used as the sensing element. The PTC thermistor may be an inorganic semiconductor of conventional art or manufactured from a semiconducting polymer as described by Panda et al in WO 2012/001465. Similarly the RTD may be manufactured according to any known method, such as forming a wire or thin film of a metal to the appropriate dimensions. Alternatively the RTD may be formed from a highly resistive printed track.

The disadvantages of using an RTD instead of a thermistor are firstly that the resistance of the RTD and its temperature dependence are comparable to that of the conductive tracks which connect the sensing elements of the network, and secondly that the relative change in resistance with temperature is small compared to that of a thermistor. However, it is well known that for a large area low resistance conductive sheet, such as could be produced from the metal comprising an RTD, that the resistance measured between any two nearby points on its surface is independent of the size and shape of the surrounding area. Hence it would not be necessary to apply the present invention to an RTD. On the other hand, in such a continuous sheet the measured resistance is much less sensitive to changes in resistance in the area outside of the space between the two points than in a discrete resistor network.

The device described below may be similarly applied to the measurement of the average, over an extended area, of any quantity which can be used to induce a change in the electrical conductivity of the material used to form the sensing elements. Known parameters include force and strain, if the material used is piezoresistive, and light if the material exhibits photoconductivity. Alternatively, if the material can be made to interact with chemical species in its immediate environment, for example by the addition of functional groups to nanoparticles in the sensor, or a change of doping level in a semiconducting polymer, the sensor array as described below could be used to monitor chemical changes in its environment.

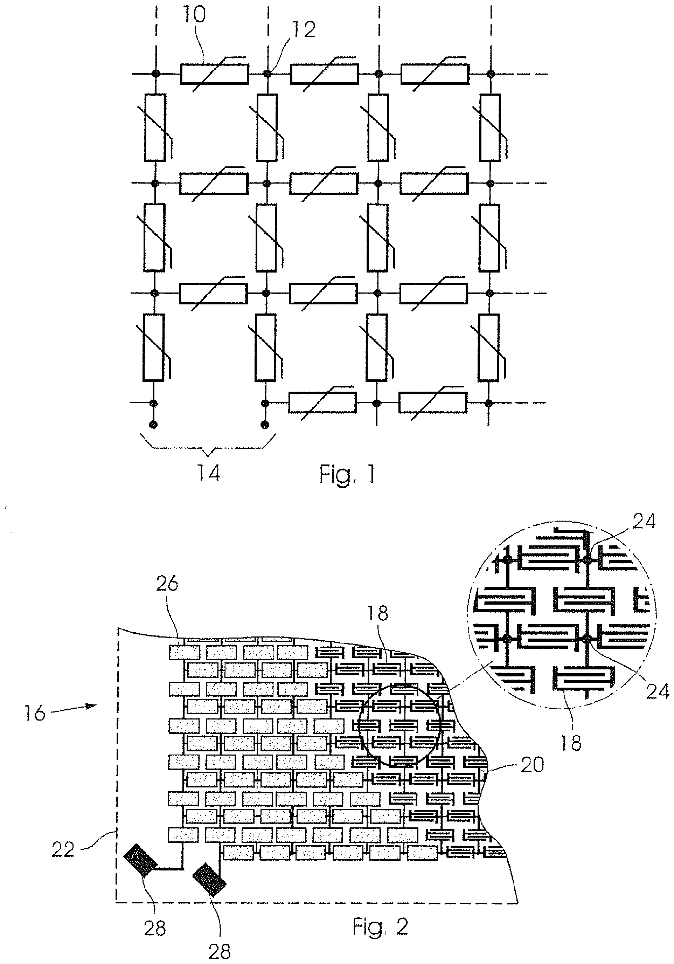

An effective circuit for a square network of resistors is shown in Figure 1. It should be noted here that the term "square" refers to the equality of magnitude of electrical resistors and not the length of side of the connections or the angle between them. Hence any network of approximately equal resistors in which four resistors 10 connect at a node 12 can be considered to be square.

By extension of the symmetry considerations, the invention disclosed here applies equally to a rectangular network, in which two unequal sets of resistors are applied, or to a hexagonal network which has three resistors connecting at each node. More general networks with three or more unequal resistors, or with a higher number of resistors connecting at a node, are possible, but are not desirable due to the increased complexity of fabrication, with no improvement in size independence of the measured electrical resistance.

In the device shown in Figure 1, one resistive link may be removed from the circuit to form a pair of terminals 14 by means of which the average resistance of the network may be measured, using any method normally applied to the measurement of the value of a single resistor. Alternatively, the resistance may be determined between any two nodes 12 without removal of the intervening resistors.

For simplicity it is preferred, but not essential, to determine the resistance between two adjacent nodes. For the complete square and hexagonal networks, the effective resistance between any two adjacent nodes is one half and one third of the resistance of any one connection, respectively. When the connecting resistor is removed, as preferred, the resistance between the terminals 14 in the square network is equal to that of the connecting resistor. Similarly, for the hexagonal network, the measured resistance between the terminals 14 is one half of that of the connecting resistor 10.

If the values of the individual resistors are not exactly equal or change under the influence of an external stimulus such as temperature, the measured resistance will be a weighted average of the resistances of the individual resistors making up the network.

Figure 2 shows a portion of a first embodiment of a printed large area temperature sensor 16 according to the present invention, in which the individual thermistor elements are fabricated according to the method and designs disclosed in WO 2012/035494 A1. A network of interdigitated pairs of contacts 18 and conductive connecting tracks 20 between them are deposited on a suitable substrate material 22. Each pair of contacts 18 comprises two sets of interdigitated fingers extending adjacent one another, with the fingers of one set of fingers being connected to a first node 24 (equivalent to the nodes 12 of Figure 1) and the fingers of the other set of fingers being connected to a second, adjacent node 24.

In this example, the substrate used was paper sheet, but equally polymer film, fabric or an insulated metal foil could be used as a substrate if a flexible sensor is required. Alternatively any rigid substrate material, such as any plastic, paper board, composite materials or coated metal sheet, may be used. The deposition method applied in the example was screen printing of a conducting ink, but any known printing, coating or vacuum deposition process appropriate to the final application may equally be used.

A layer 26 of material with a temperature dependent resistance is then applied to each pair of contacts 18. (For clarity in the Figure, not all the interdigitated contacts 18 are shown as being covered by the layer 26 of semiconductor material.) In a preferred embodiment the semiconductor material is deposited by screen printing of an ink comprising silicon nanoparticles over the pairs of contacts 18. However, any suitable material and deposition process which is compatible with the fabrication of the contacts and other materials used may be applied. Similarly, the semiconductor material may be deposited before the contacts are deposited, and, if required, encapsulation or insulation layers may be deposited on top of the two layers, between the first layer and the substrate or in both positions. Also, instead of a temperature dependent material, in devices falling outside the scope of the invention, any other material, the resistance of which changes under an external stimulus, such as piezoresisitive or a photoconductive material, may be used for the fabrication of different sensors such as a pressure sensor or optical sensor. To complete the device, one sensor element is excluded from the design and a pair of terminals 28 (corresponding to the pair of terminals 14 in Figure 1) form the connection to the two nodes 24 adjacent to the missing sensor element.

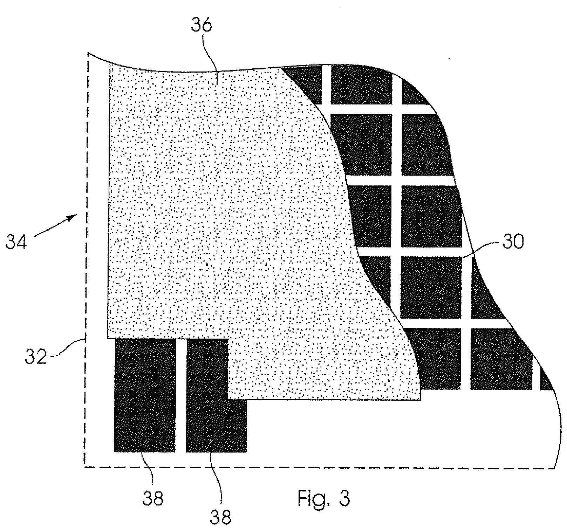

A second embodiment of the present invention, of much simpler design, is shown in Figure 3. In this embodiment an array of discrete metallic contacts 30 is disposed in a regular pattern on a substrate 32 to define a
large area temperature sensor 34. In the illustrated example the contacts 30 define a square array of square metal contacts, but equally a hexagonal arrangement of triangles may be used, or another suitable arrangement. As in the first embodiment there is no restriction on the choice of materials and fabrication process, but a flexible sheet substrate, metallic inks to define the contacts, and a conventional printing method such as screen printing are preferred.

A continuous layer 36 of semiconductor material, having a temperature dependent resistance, is deposited over the metallic contacts 30, leaving at least two of the contacts free to form a pair of terminal contacts 38. In this embodiment the connecting resistors of the device (corresponding to the resistors 10 of Figure 1) are formed in the gaps between the parallel sides of adjacent metallic contacts, and any resistive material directly above the metallic contacts is short circuited by the contact material and does not contribute to the electrical behaviour of the device. Hence it may be desirable to deposit the semiconductor material in a grid-like pattern primarily over the gaps between the contacts 30, for example to reduce material costs or to achieve a decorative effect. Also, as in the first embodiment, the order of deposition of the conducting and semiconducting materials may be interchanged and other layers may be incorporated to provide encapsulation or electrical insulation.

## Claims

1. A sensing device (34) comprising a regular pattern of electrically conductive contacts (30) and a complemental pattern of semiconductor material (36) which has a temperature dependent resistance and is in contact with said electrically conductive contacts, wherein the semiconductor material is applied over the electrically conductive contacts or the electrically conductive contacts are deposited on the semiconductor material to define a network of thermistor elements corresponding to said regular pattern,
which network is topologically equivalent to i) a square network of nominally identical resistors in which four approximately equal resistors connect at a node, or ii) a rectangular network of two unequal sets of resistors in which four resistors connect at a node, or iii) a hexagonal network of nominally identical resistors in which three approximately equal resistors connect at a node,
wherein the sensing device has terminals (38) at which an average resistance value thereof can be measured, and wherein the network of thermistor elements is supported on a substrate (32) which can be reduced in size from an initial size without substantially changing the average resistance value.

2. The sensing device of claim 1 wherein the network of thermistor elements comprises pairs of electrically conductive contacts connected by electrically conductive connecting tracks deposited on the substrate, and said semiconductor material having a temperature dependent resistance is deposited selectively over the pairs of contacts.

3. The sensing device of claim 1 or claim 2 wherein the substrate comprises a flexible sheet material selected from paper sheet, a polymer film, fabric or an insulated metal foil.

4. The sensing device of claim 1 or claim 2 wherein the substrate comprises a rigid material selected from a stiff plastics sheet material, paper board, a composite material or a coated metal sheet.

5. The sensing device of any one of claims 1 to 4 wherein the electrically conductive contacts and tracks and the complemental pattern of material having a temperature dependent resistance are formed by screen printing of a conducting ink or paste.

6. The sensing device of claim 1 wherein the network of thermistor elements comprises sets of electrically conductive contacts connected by electrically conductive tracks extending between the sets of contacts, the sets of contacts and the conductive tracks being deposited on the substrate, with the layer of semiconductor material having a temperature dependent resistance being applied to each set of contacts.

7. The sensing device of claim 6 wherein each set of contacts comprises two sets of interdigitated fingers extending adjacent one another, with the fingers of one set of fingers being connected to a first node of the network and the fingers of the other set of fingers being connected to a second, adjacent node of the network.

## Patentansprüche

1. Messvorrichtung (34), umfassend ein regelmäßiges Muster aus elektrisch leitenden Kontakten (30) und ein ergänzendes Muster aus Halbleitermaterial (36), das einen temperaturabhängigen Widerstand aufweist und mit den elektrisch leitenden Kontakten in Kontakt ist,
wobei das Halbleitermaterial über den elektrisch leitenden Kontakten angebracht wird oder die elektrisch leitenden Kontakte auf dem Halbleitermaterial aufgebracht werden, um ein Netz aus Thermistorelementen zu definieren, das dem regelmäßigen Muster entspricht,
wobei das Netz topologisch Folgendem entspricht: i) einem quadratischen Netz aus nominell identischen Widerständen, bei dem vier ungefähr gleiche Widerstände an einem Knoten verbunden sind, oder ii) einem rechtwinkligen Netz aus zwei ungleichen Sätzen Widerstände, bei dem vier Widerstände an einem Knoten verbunden sind, oder iii) einem hexagonalen Netz aus nominell identischen Widerständen, bei dem drei ungefähr gleiche Widerstände an einem Knoten verbunden sind,
wobei die Messvorrichtung Anschlüsse (38) aufweist, an denen ein Durchschnittswiderstandswert davon erfasst werden kann, und wobei das Netz aus Thermistorelementen auf einem Substrat (32) gestützt wird, dessen Größe von einer Anfangsgröße reduziert werden kann, ohne den Durchschnittswiderstandswert wesentlich zu ändern.

2. Messvorrichtung nach Anspruch 1, wobei das Netz aus Thermistorelementen ein Paar elektrisch leitende Kontakte umfasst, die durch elektrisch leitende Verbindungsbahnen verbunden sind, die auf dem Substrat aufgebracht sind, und das Halbleitermaterial, das einen temperaturabhängigen Widerstand aufweist, selektiv über dem Paar Kontakte aufgebracht wird.

3. Messvorrichtung nach Anspruch 1 oder Anspruch 2, wobei das Substrat ein flexibles Bogenmaterial umfasst, das aus einem Papierbogen, einer Polymerschicht, einem Gewebe oder einer isolierten Metallfolie ausgewählt ist.

4. Messvorrichtung nach Anspruch 1 oder Anspruch 2, wobei das Substrat ein starres Material umfasst, das aus einem steifem Kunststoffplattenmaterial, Pappe, einem Verbundmaterial oder einer beschichteten Metallplatte ausgewählt ist.

5. Messvorrichtung nach einem der Ansprüche 1 bis 4, wobei die elektrisch leitenden Kontakte und Bahnen und das ergänzende Muster aus Material, das einen temperaturabhängigen Widerstand aufweist, durch Siebdruck einer leitfähigen Tinte oder Paste gebildet werden.

6. Messvorrichtung nach Anspruch 1, wobei das Netz aus Thermistorelementen Sätze elektrisch leitender Kontakte umfasst, die durch elektrisch leitende Bahnen, welche sich zwischen den Sätzen Kontakte erstrecken, verbunden sind, wobei die Sätze Kontakte und die leitenden Bahnen auf dem Substrat aufgebracht werden, wobei die Schicht aus Halbleitermaterial, das einen temperaturabhängigen Widerstand aufweist, auf jedem Satz Kontakte angebracht wird.

7. Messvorrichtung nach Anspruch 6, wobei jeder Satz Kontakte zwei Sätze ineinandergreifende Finger umfasst, die sich nebeneinander erstrecken, wobei die Finger eines Satzes Finger mit einem ersten Knoten des Netzes verbunden sind und die Finger des anderen Satzes Finger mit einem zweiten benachbarten Knoten des Netzes verbunden sind.

## Revendications

1. Dispositif de détection (34) comprenant un motif régulier de contacts électro-conducteurs (30) et un motif complémentaire de matériau semiconducteur (36) qui présente une résistance dépendant de la température et est en contact avec lesdits contacts électro-conducteurs,
dans lequel le matériau semiconducteur est appliqué sur les contacts électro-conducteurs ou les contacts électro-conducteurs sont déposés sur le matériau semiconducteur pour définir un réseau d'éléments de thermistor correspondant audit motif régulier,
lequel réseau est topologiquement équivalent à i) un réseau carré de résistors nominalement identiques dans lequel quatre résistors approximativement égaux se connectent à un noeud, ou ii) un réseau rectangulaire de deux ensembles inégaux de résistors dans lequel quatre résistors se connectent à un noeud, ou iii) un réseau hexagonal de résistors nominalement identiques dans lequel trois résistors approximativement égaux se connectent à un noeud,
dans lequel le dispositif de détection présente des terminaux (38) au niveau desquels une valeur de résistance moyenne de ceux-ci peut être mesurée, et dans lequel le réseau d'éléments de thermistor est supporté sur un substrat (32) qui peut être réduit en taille à partir d'une taille initiale sans changer sensiblement la valeur de résistance moyenne.

2. Dispositif de détection selon la revendication 1 dans lequel le réseau d'éléments de thermistor comprend des paires de contacts électro-conducteurs connectés par des pistes de connexion électro-conductrices déposées sur le substrat, et ledit matériau semi-conducteur présentant une résistance dépendant de la température est déposé de manière sélective sur les paires de contacts.

3. Dispositif de détection selon la revendication 1 ou la revendication 2 dans lequel le substrat comprend un matériau en feuille flexible sélectionné à partir d'une feuille de papier, d'un film polymère, d'un tissu ou d'une feuille métallique isolée.

4. Dispositif de détection selon la revendication 1 ou la revendication 2 dans lequel le substrat comprend un matériau rigide sélectionné à partir d'un matériau en feuille plastique rigide, d'un panneau en papier, d'un matériau composite ou d'une feuille métallique revêtue.

5. Dispositif de détection selon l'une quelconque des revendications 1 à 4 dans lequel les contacts et les pistes électro-conducteurs et le motif complémentaire de matériau présentant une résistance dépendant de la température sont formés par sérigraphie d'une encre ou d'une pâte conductrice.

6. Dispositif de détection selon la revendication 1 dans lequel le réseau d'éléments de thermistor comprend des ensembles de contacts électro-conducteurs connectés par des pistes électro-conductrices s'étendant entre les ensembles de contacts, les ensembles de contacts et les pistes conductrices étant déposés sur le substrat, avec la couche de matériau semiconducteur présentant une résistance dépendant de la température étant appliquée à chaque ensemble de contacts.

7. Dispositif de détection selon la revendication 6 dans lequel chaque ensemble de contacts comprend deux ensembles de doigts interdigités s'étendant de manière adjacente l'un à l'autre, avec les doigts d'un ensemble de doigts étant connectés à un premier noeud du réseau et les doigts de l'autre ensemble de doigts étant connectés à un second noeud adjacent du réseau.
